# EUROPÄISCHE PATENTSCHRIFT

(11) **EP 3 845 070 B1**
(45) Veröffentlichungstag und Bekanntmachung des Hinweises auf die Patenterteilung: **20.08.2025**
(21) Anmeldenummer: 19220088.9
(22) Anmeldetag: 30.12.2019
(51) Int. Cl.: A23C 9/142, A23C 1/12, A23L 33/00, A61K 8/64, A61Q 19/00

(54) **VERFAHREN ZUR HERSTELLUNG VON DEMINERALISIERTEM MILCHPULVER**
METHOD FOR THE PRODUCTION OF DEMINERALIZED MILK POWDER
PROCÉDÉ DE PRODUCUTION D'UNE POUDRE DE LAIT DÉMINÉRALISÉ

(43) Veröffentlichungstag der Anmeldung: 07.07.2021
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 2 679 098
- EP-A1- 2 839 749
- WO-A1-96/32021
- US-A- 5 503 865
- GERMANO MUCCHETTI ET AL: "The pre-concentration of milk by nanofiltration in the production of Quarg-type fresh cheeses", LAIT, 1 January 2000 (2000-01-01), pages 43 - 50, XP055087166, Retrieved from the Internet <URL:http://lait.dairy-journal.org/articles/lait/pdf/2000/01/L0107.pdf> [retrieved on 20131107], DOI: 10.1051/lait:2000106

## Beschreibung

### GEBIET DER ERFINDUNG

Erfindung befindet sich auf dem Gebiet der Milchwirtschaft und betrifft Verfahren zur Herstellung von demineralisierten Milchpulvern.

### TECHNOLOGISCHER HINTERGRUND

Unter Milchpulver versteht man ganz allgemein eine Trockenmasse, die erhalten wird, wenn man Milch den Wasseranteil entzieht. So hat Vollmilch einen Wasseranteil von etwa 87,5 Prozent. Dieser wird zur Herstellung von Vollmilchpulver auf ungefähr 3 Prozent reduziert. Zur Herstellung von einem Kilogramm Trockenmilchpulver sind etwa sechs bis sieben Liter Milch erforderlich. Vor dem Trocknungsschritt wird in der Regel der Anteil an Trockensubstanz in Verdampfapparaten erhöht. Das fertige Produkt enthält rund 26 Prozent Fett, 25 Prozent Eiweiß und 38 Prozent Milchzucker.

Magermilchpulver stellt hingegen ein aus Magermilch durch Trocknung hergestelltes Milchtrockenprodukt (Restwassergehalt etwa 4 Prozent) dar. Magermilchpulver enthält rund 36 Prozent Eiweiß und 52 Prozent Milchzucker.

### RELEVANTER STAND DER TECHNIK

Aus dem Stand der Technik sind die unterschiedlichsten Verfahren zur Herstellung von Milchpulvern bekannt. US5503865 offenbart die Herstellung einer getrockneten Milchzusammensetzung auf der Basis der natürlichen Bestandteile der Milch, dadurch gekennzeichnet, dass die Milchzusammensetzung bezogen auf das Gewicht der nichtfetten Trockenmasse, 33 bis 36 % Protein, 48 bis 58 % Lactose und 3 bis 5 % Mineralstoffe enthält und dass die Milchmilchzusammensetzung hinsichtlich der Mineralstoffe einen Calciumgehalt von 75 bis 100 % von dem der Milch, einen Phosphorgehalt von 50 bis 75 % von dem der Milch, einen Natriumgehalt und einen Kaliumgehalt von jeweils 5 bis 20 % von denen der Milch und einen Gehalt an Citraten von 10 bis 30 % von dem der Milch hat. Bei dem Verfahren wird entrahmte Milch durch Ultrafiltration oder Mikrofiltration auf ein Drittel bis ein Sechstel des Volumens konzentriert. Optional kann eine Diafiltration des Retentats vor der Weiterverarbeitung durchführt werden.

Aus der EP 2679098 B1 ist Verfahren zur Herstellung von Milchpulvern mit niedrigem Bakteriengehalt und einem Molkenprotein-Stickstoffindex (WPNI) von mindestens 2 bekannt, in dem (a) Feststoffe aus Rohmilch in einem in sich bekannten Verfahren entfernt werden, dann die Sahne abgetrennt wird, (b) die so erhaltene Magermilch wird einer Mikrofiltration unterzogen, (c) das so erhaltene Permeat pasteurisiert, (d) das so erhaltene pasteurisierte Permeat auf eine Trockenmasse von 30 bis 50 Gew.-% konzentriert und das Retentat entsorgt wird, (e) das so erhaltene Konzentrat für einen Zeitraum von mindestens 15 Sekunden bei einer Temperatur von mindestens 72 Grad Celsius einer thermischen Behandlung unterzogen und (f) das thermisch behandelte Produkt zu einem Trockenpulver verarbeitet wird.

In der EP 2732706 B1 wird ein Verfahren zur Herstellung keimarmer Milchpulver mit einem Molkenproteinindex (MPI) von mindestens 2 vorgeschlagen, bei dem man (a) Rohmilch in an sich bekannter Weise von Feststoffen befreit, den Rahm abtrennt, (b) die so erhaltene Magermilch einer Infusionserhitzung unterwirft, (c) die erhitzte Milch auf eine Trockenmasse von 30 bis 50 Gew.-% konzentriert, (d) gegebenenfalls das so erhaltene Konzentrat einer Temperaturbehandlung über einen Zeitraum von mindestens 15 Sekunden bei mindestens 72 °C unterwirft, und (e) das so erhaltene temperaturbehandelte Produkt zu einem trockenen Pulver verarbeitet.

Milchpulver mit verbesserten sensorischen Eigenschaften sind aus der EP 2946669 B1 (DMK) bekannt. Die Pulver sind erhältlich, indem (a) eine Mischung aus einem Milchprodukt und Zucker hergestellt wird, (b) die Mischung einer ersten Temperaturbehandlung unterzogen wird und dabei gleichzeitig sterilisiert und konzentriert wird, (c) das so erhaltene Konzentrat einer zweiten Temperaturbehandlung unterzogen wird, bei der eine Karamellisierung stattfindet, (d) das so erhaltene karamellisierte Produkt einer ersten Kühlung unterworfen wird, (e) das so erhaltene erste gekühlte Produkt mit Kohlenhydratkristallen gekeimt wird, (f) das so erhaltene gekeimte Produkt einer zweiten Kühlung unterworfen wird, (g) das so erhaltene zweite gekühlte Produkt einer Trocknung auf einem Vakuumbandtrockner mit anschließender Zerkleinerung unterworfen wird und schließlich (h) das Trockenpulver ausgetragen wird.

Gegenstand der WO 2016 016397 A1 ist beispielsweise ein Verfahren zur Herstellung eines lactosehaltigen Milchpulvers. Das Verfahren beinhaltet die aufeinanderfolgenden Schritte von: a) Konzentrieren einer laktosehaltigen Flüssigkeit, um eine konzentrierte Flüssigkeit mit 55 Prozent bis 65 Prozent Trockenmassegehalt zu erhalten, wobei der Konzentrationsschritt a) eine Dauer zwischen 10 und 20 Minuten aufweist; b) Überkonzentrieren des aus Schritt a) erhaltenen Konzentrats, um ein überkonzentriertes Material mit 75 Prozent bis 80 Prozent Trockenmassegehalt zu erhalten, wobei der Überkonzentrationsschritt b) eine Dauer zwischen 2 und 10 Minuten aufweist; c) Granulieren des aus Schritt b) erhaltenen Überkonzentrats durch Mischen des Überkonzentrats mit einem lactosehaltigen Pulver mit einem Trockenmassegehalt von mindestens 95 Prozent, bis ein granuliertes Pulver mit einem Trockenmassegehalt von mindestens 85 Prozent Trockenextrakt erhalten wird; und d) Trocknen des aus Schritt c) erhaltenen granulierten Pulvers, um ein lactosehaltiges Pulver mit einem Trockenmassegehalt von mindestens 95 Prozent zu erhalten.

### AUFGBE DER ERFINDUNG

Die Aufgabe der vorliegenden Erfindung hat daher darin bestanden, ein alternatives Verfahren zur Herstellung von demineralisiertem Milchpulver speziell für die Ernährung von Kleinkindern zur Verfügung zu stellen, das frei von den geschilderten Nachteilen ist und insbesondere zu Produkten mit höherem Proteinanteil führt.

### BESCHREIBUNG DER ERFINDUNG

Gegenstände der Erfindung betreffen entsprechende Verfahren zur Herstellung der Vollmilch- bzw. Magermilchpulver. Die beiden Varianten unterscheiden sich im Wesentlichen nur durch die Auswahl von Vollmilch oder Magermilch als Ausgangsstoffe, so dass es sich um zwei Alternativen handelt, die durch den gleichen erfinderischen Gedanken verbunden sind.

Die hergestellten Milchpulver weisen einen Proteinanteil von mindestens 24 Gew.-% und insbesondere von etwa 34 bis etwa 50 Gew.-% auf. Der Mineraliengehalt liegt typisch unter 4 Gew.-%, vorzugsweise unter 3 Gew.-% und die Restfeuchte unter 5 Gew.-%

In der ersten Ausgestaltung wird ein Verfahren zur Herstellung eines demineralisierten Vollmilchpulvers offenbart, umfassend oder bestehend aus den folgenden Schritten:
(a) Bereitstellen von Vollmilch,
(b) Pasteurisierung der Vollmilch und anschließende oder gleichzeitige Auftrennung des Pasteurisierungsproduktes in eine Magermilch- und eine Rahmfraktion,
(c) Temperaturbehandlung der Rahmfraktion aus Schritt (b),
(d) Ultrafiltration oder Diafiltration der Magermilchfraktion aus Schritt (b) unter Erhalt eines erstes proteinreiches Retentats R1 sowie eines ersten Permeats P1;
(e) Nanofiltration des Permeat P1 aus Schritt (d) unter Erhalt eines Lactose und Mineralien enthaltenden zweiten Retentats R2 sowie eines zweiten Permeats P2, wobei die Nanofiltration mit einer Membran durchführt wird, die einen mittleren Porendurchmesser von etwa 100 bis etwa 2.000 Dalton aufweist;
(f) Temperaturbehandlung des Retentats R2 aus Schritt (e);
(g) Filtration oder Separation des temperaturbehandelten Produktes aus Schritt (f) unter Erhalt eines dritten Calciumphosphat-haltigen Retentats R3 sowie eines dritten Permeats P3;
(h) Vermischen des dritten Permeats P3 aus Schritt (g) mit dem proteinreichen Retentat R1 aus Schritt (b) sowie wenigstens eines Teils der temperaturbehandelten Rahmfraktion aus Schritt (c); und
(i) Entwässern der Mischung aus Schritt (h).

In der zweiten Ausgestaltung wird ein Verfahren zur Herstellung eines demineralisierten Magermilchpulvers offenbart, umfassend oder bestehend aus den folgenden Schritten:
(a) Bereitstellen von Magermilch,
(b) Ultrafiltration oder Diafiltration der Magermilch unter Erhalt eines erstes proteinreiches Retentats R1 sowie eines ersten Permeats P1;
(c) Nanofiltration des Permeat P1 aus Schritt (b) unter Erhalt eines Lactose und Mineralien enthaltenden zweiten Retentats R2 sowie eines zweiten Permeats P2, wobei die Nanofiltration mit einer Membran durchführt wird, die einen mittleren Porendurchmesser von etwa 100 bis etwa 2.000 Dalton aufweist;
(d) Temperaturbehandlung des Retentats R2 aus Schritt (c);
(e) Filtration oder Separation des temperaturbehandelten Produktes aus Schritt (d) unter Erhalt eines dritten Calciumphosphat-haltigen Retentats R3 sowie eines dritten Permeats P3;
(f) Vermischen des dritten Permeats P3 aus Schritt (e) mit dem proteinreichen Retentat R1 aus Schritt (b); und
(g) Entwässern der Mischung aus Schritt (f).

Überraschenderweise wurde gefunden, dass auf diese Weise ein demineralisiertes Milchpulver hergestellt werden kann.

### FILTRATIONSVERFAHREN

Die beiden alternativen Herstellverfahren sehen verschiedene Filtrationsschritte vor, nämlich eine Ultrafiltration in Schritt (d bzw. b), eine Nanofiltration in Schritt (e bzw. c) sowie eine weitere Ultrafiltration oder Mikrofiltration in Schritt (g bzw. e). Im ersten Filtrationsschritt geht es darum, große und besonders temperaturlabile Proteine als Retentat aus der Milch abzutrennen und diese Fraktion erst später wieder zuzusetzen. Bei der sich anschließenden Nanofiltration des Permeats werden über das Permeat monovalente Kationen, im Wesentlichen Natrium und Kalium - abgetrennt, die ansonsten dem Pulver einen unerwünschten metallischen Beigeschmack verleihen würden. Außerdem wird im Retentat die Lactose aufkonzentriert; der entsprechende Seitenstrom kann anschließend separat aufgearbeitet werden. Mittels einer zweiten Ultra- oder Mikrofiltration werden nach der Temperaturbehandlung zweiwertige Ionen, insbesondere das Calciumphosphat abgetrennt.

Ultra- und Nanofiltration sind Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 120 bar liegt.

Die Ausschlussgrenzen von Ultrafiltrationsmembranenen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von etwa 150 bis 1.000 Dalton.

Alternativ kann statt der Ultrafiltration auch eine Diafiltration bzw. eine Kombination durchgeführt werden. Der Vorteil besteht darin, dass in diesem Fall mehr Lactose und Mineralien aus dem Retentat ausgewaschen werden, was zu höherer Reinheit führt. Weiterhin werden so auch bei der folgenden Nanofiltration mehr monovalente Ionen entfernt.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Auch die Mikrofiltration gehört zu den Membrantrennverfahren. Der wesentliche Unterschied zu Ultra- und Nanofiltration besteht in den größeren Porendurchmessern von mehr als 0,1 µm, speziell von etwa 0,1 bis 1,4 µm entsprechend etwa 100.000 bis etwa 800.000 Dalton.

Die Angaben zum Cut-off überschneiden sich im Grenzbereich, so dass sich beispielsweise eine Membran mit einem Porendurchmesser von etwa 2.000 Dalton sowohl für eine Ultra- als auch eine Nanofiltration eignen kann.

Alle genannten Filtrationsverfahren können im Sinne der vorliegenden Erfindung unabhängig voneinander "heiß" oder "kalt", d.h. im Temperaturbereich von etwa 10 bis etwa 60 °C durchgeführt werden. Bevorzugt ist es jedoch, bei Temperaturen im Bereich von etwa 50 bis etwa 60 °C zu arbeiten, da auf diese Weise Rücklöseeffekte vermieden werden.

### TEMPERATURBEHANDLUNG

Im Anschluss an die Nanofiltration wird das erhaltene Retentat einer Temperaturbehandlung unterzogen, um das Calciumphosphat zu fällen. Bei der Temperaturbehandlung handelt es sich um eine hocherhitzung, die typischerweise bei etwa 70 bis etwa 90 °C über einen Zeitraum von etwa 10 bis etwa 30 Minuten und insbesondere etwa 20 bis etwa 25 Minuten durchgeführt wird.

Die gleichen Bedingungen sind auf die Rahmfraktion anzuwenden, die bei der Herstellung eines Vollmilchpulvers anschließend ganz oder teilweise wieder zugemischt wird.

### TROCKNUNG

Das temperaturbehandelte wird wie beschrieben einer Mikro- bzw. Ultrafiltration unterworfen und dabei vorhandenes Calciumphosphat entfernt. Das phosphatfreie Produkt wird wie beschrieben zum einen mit dem Retentat aus Schritt (a), welches die großen und besonders temperaturempfindlichen Proteine enthielt, vereinigt. In diesem Fall wird ein Magermilchpulver erhalten. Wird ein Vollmilchpulver gewünscht, setzt man an dieser Stelle zusätzlich noch die zuvor aus der Vollmilch abgetrennte und anschließend temperaturbehandelte Rahmfraktion ganz oder teilweise, beispielsweise in einer Menge von 10 bis 90 % der Gesamtmenge zu. Anschließend erfolgt die Trocknung der Mischung bzw. der Mischungen.

Vorzugsweise kommt dabei die Sprühtrocknung zum Zuge, wobei die Temperatur im Einlass typischerweise etwa 180 bis etwa 260 °C und am Ausgang etwa 80 bis etwa 105 °C beträgt. Die Fraktion bedarf daher keiner Kühlung bevor sie in den Sprühturm gelangt. Temperaturen von 60 bis 70 °C sind dabei sogar bevorzugt, da auf diese Weise die Gefahr verringert wird, dass Teil der Proteine denaturieren. Alternativ können die Produkte auch durch Gefriertrocknung entwässert werden. Der Restwassergehalt beträgt dabei maximal 5 Gew.-% und vorzugsweise etwa 3 bis etwa 4 Gew.-%.

Dem Produkt können vor, vorzugsweise aber nach dem Versprühen auch weitere Zusatzstoffe zugesetzt werden, wie beispielsweise Lactoferrin, Lecithine, Vitamine oder Lebensmittelemulgatoren [EP 1314367 A1, NESTLE] und dergleichen. Man erhält schließlich demineralisierte Milchpulver, die einen Proteinanteil von etwa 24 bis etwa 50 Gew.-%, vorzugsweise von etwa 28 bis etwa 40 Gew.-% aufweisen.

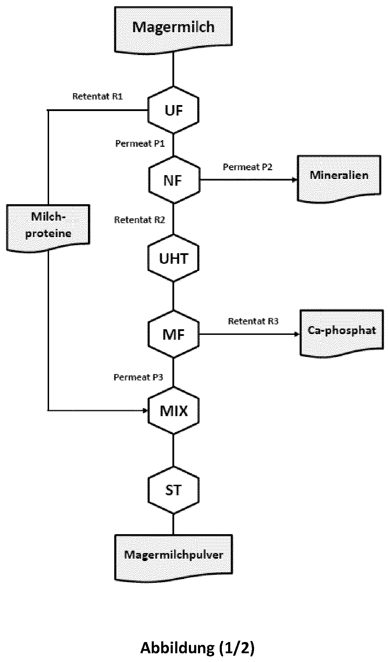

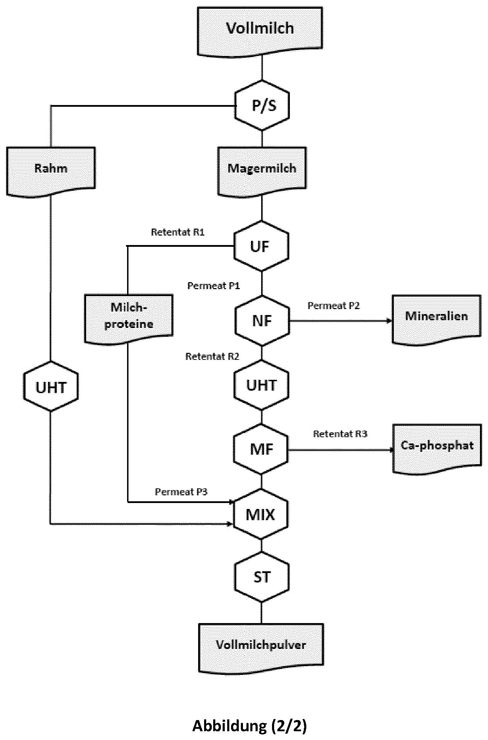

Das erfindungsgemäße Verfahren wird auch in den Fließbildern nach den **Abbildungen 1 und 2** näher erläutert. Dabei bedeuten P = Pasteurisierung, S = Separation, UF = Ultrafiltration, NF = Nanofiltration, UHT = Ultrahocherhitzung, MF = Mikrofiltration, MX = Vermischung und ST = Sprühtrocknung.

### BEISPIELE

### BEISPIEL 1

### Herstellung eines demineralisierten Vollmilchpulvers gemäß Erfindung

Im Technikumsbetrieb wurden 1.000 Liter Vollmilch sowie 1.000 Liter Dialysewasser in einem Plattenwärmeaustauscher pasteurisiert und entrahmt. Die so erhaltene Magermilch wurde bei 10 °C über eine Ultrafiltrationseinheit geleitet, die mit einer Keramikmembran mit einem mittleren Porendurchmesser von 25.000 Dalton ausgestattet war. Es wurde ein proteinreiches Retentat R1 und ein verarmtes Permeat P1 erhalten. Das Permeat P1 wurde bei gleichbleibender Temperatur auf eine Nanofiltrationsanlage mit einer Spiralwickelmembran mit einem mittleren Porendurchmesser von 700 Dalton gegeben. Es wurde ein Lactose und Mineralien enthaltendes Retentat R2 erhalten, sowie ein Permeat P2. Das Retentat R2 wurde in einem Kurzzeiterhitzer 20 Sekunden lang auf 80 °C angewärmt und für 20 Minuten in einem Rührkessel bei dieser Temperatur gehalten und dann auf eine Mikrofiltrationseinheit gegeben, die mit einer Keramikmembran mit einem mittleren Porendurchmesser von 50.000 Dalton versehen war. Bei etwa 55 °C wurde ein phosphathaltiges drittes Retentat R3 und ein drittes Permeat P3 erhalten. Die Fraktionen P3 und R1 sowie die zuvor abgetrennte und anschließend pasteurisierte Rahmfraktion wurden in einer Mischeinheit vereinigt, über einen Wärmetauscher auf etwa 65 °C vorgewärmt und dann bei 240 °C Kopftemperatur über einen Turm versprüht. Das resultierende Pulver wies einen Proteingehalt von 28,4 Gew.-%, einen Fettgehalt von 26,3 Gew.-%, einen Aschegehalt von 1,8 Gew.-% und eine Restfeuchte von weniger als 1 Gew.-% auf.

### VERGLEICHSBEISPIEL V1 (NICHT ERFINDUNGSGEMÄß)

### Herstellung eines demineralisierten Vollmilchpulvers mah dem Stand der Technik

Analog Beispiel 1 wurden 1.000 Liter Vollmilch sowie 1.000 Liter Dialysewasser pasteurisiert und entrahm und die so erhaltene Magermilch anschließend bei 10 °C auf eine Nanofiltrationsanlage mit einer Spiralwickelmembran mit einem mittleren Porendurchmesser von 700 Dalton gegeben. Das Lactose und Mineralien enthaltende Permeat wurde abgetrennt und separat weiterverarbeitet. Das Retentat wurde auf eine Trockenmasse von etwa 50 Gew.-% eingedampft mit der zuvor abgetrennten und pasteurisierten Rahmfraktion vereinigt, über einen Wärmetauscher auf etwa 80 °C vorgewärmt und dann bei 240 °C Kopftemperatur über einen Turm versprüht. Das resultierende Pulver wies einen deutlich geringeren Proteingehalt von 26,2 Gew.-%, einen Fettgehalt von 26,8 Gew.-%, einen Aschegehalt von 4,6 Gew.-% und eine Restfeuchte von weniger als 1 Gew.-% auf.

### BEISPIEL 2

### Herstellung eines demineralisierten Magermilchpulvers gemäß Erfindung

Im Technikumsbetrieb wurden 1.000 Liter Magermilch sowie 1.000 Liter Dialysewasser bei 10 °C über eine Ultrafiltrationseinheit geleitet, die mit einer Keramikmembran mit einem mittleren Porendurchmesser von 25.000 Dalton ausgestattet war. Es wurde ein proteinreiches Retentat R1 und ein verarmtes Permeat P1 erhalten. Das Permeat P1 wurde bei gleichbleibender Temperatur auf eine Nanofiltrationsanlage mit einer Spiralwickelmembran mit einem mittleren Porendurchmesser von 700 Dalton gegeben. Es wurde ein Lactose und Mineralien enthaltendes Retentat R2 erhalten, sowie ein Permeat P2. Das Retentat R2 wurde in einem Kurzzeiterhitzer 20 Sekunden lang auf 80 °C angewärmt und für 20 Minuten in einem Rührkessel bei dieser Temperatur gehalten und dann auf eine Mikrofiltrationseinheit gegeben, die mit einer Keramikmembran mit einem mittleren Porendurchmesser von 50.000 Dalton versehen war. Bei etwa 55 °C wurde ein phosphathaltiges drittes Retentat R3 und ein drittes Permeat P3 erhalten. Die Fraktionen P3 und R1 sowie die zuvor abgetrennte und anschließend pasteurisierte Rahmfraktion wurden in einer Mischeinheit vereinigt, über einen Wärmetauscher auf etwa 65 °C vorgewärmt und dann bei 240 °C Kopftemperatur über einen Turm versprüht. Das resultierende Pulver wies einen Proteingehalt von 28,4 Gew.-%, einen Aschegehalt von 1,9 Gew.-% und eine Restfeuchte von 3,9 Gew.-% auf.

### VERGLEICHSBEISPIEL V2 (NICHT ERFINDUNGSGEMÄß)

### Herstellung eines demineralisierten Magermilchpulvers nach dem Stand der Technik

Analog Beispiel 2 wurden 1.000 Liter Magermilch sowie 1.000 Liter Dialysewasser bei 10 °C auf eine Nanofiltrationsanlage mit einer Spiralwickelmembran mit einem mittleren Porendurchmesser von 700 Dalton gegeben. Das die monovalenten Ionen enthaltende Retentat wurde abgetrennt und separat weiterverarbeitet. Das Retentat wurde auf eine Trockenmasse von etwa 50 Gew.-% eingedampft, über einen Wärmetauscher auf etwa 80 °C vorgewärmt und dann bei 240 °C Kopftemperatur über einen Turm versprüht. Das resultierende Pulver wies einen Proteingehalt von 36,1 Gew.-%, einen Aschegehalt von 5,1 Gew.-% und eine Restfeuchte von 4,3 Gew.-% auf.

## Patentansprüche

1. Verfahren zur Herstellung eines demineralisierten Milchpulvers, umfassend oder bestehend aus den folgenden Schritten:
(a) Bereitstellen von Vollmilch,
(b) Pasteurisierung der Vollmilch und anschließende oder gleichzeitige Auftrennung des Pasteurisierungsproduktes in eine Magermilch- und eine Rahmfraktion,
(c) Temperaturbehandlung der Rahmfraktion aus Schritt (b),
(d) Ultrafiltration oder Diafiltration der Magermilchfraktion aus Schritt (b) unter Erhalt eines erstes proteinreiches Retentats R1 sowie eines ersten Permeats P1;
(e) Nanofiltration des Permeat P1 aus Schritt (d) unter Erhalt eines Lactose und Mineralien enthaltenden zweiten Retentats R2 sowie eines zweiten Permeats P2, wobei die Nanofiltration mit einer Membran durchführt wird, die einen mittleren Porendurchmesser von etwa 100 bis etwa 2.000 Dalton aufweist;
(f) Temperaturbehandlung des Retentats R2 aus Schritt (e);
(g) Filtration oder Separation des temperaturbehandelten Produktes aus Schritt (f) unter Erhalt eines dritten Calciumphosphat-haltigen Retentats R3 sowie eines dritten Permeats P3;
(h) Vermischen des dritten Permeats P3 aus Schritt (g) mit dem proteinreichen Retentat R1 aus Schritt (b) sowie wenigstens eines Teils der temperaturbehandelten Rahmfraktion aus Schritt (c); und
(i) Entwässern der Mischung aus Schritt (h).

2. Verfahren zur Herstellung eines demineralisierten Milchpulvers, umfassend oder bestehend aus den folgenden Schritten:
(a) Bereitstellen von Magermilch,
(b) Ultrafiltration oder Diafiltration der Magermilch unter Erhalt eines erstes proteinreiches Retentats R1 sowie eines ersten Permeats P1;
(c) Nanofiltration des Permeat P1 aus Schritt (b) unter Erhalt eines Lactose und Mineralien enthaltenden zweiten Retentats R2 sowie eines zweiten Permeats P2, wobei die Nanofiltration mit einer Membran durchführt wird, die einen mittleren Porendurchmesser von etwa 100 bis etwa 2.000 Dalton aufweist;
(d) Temperaturbehandlung des Retentats R2 aus Schritt (c);
(e) Filtration oder Separation des temperaturbehandelten Produktes aus Schritt (d) unter Erhalt eines dritten Calciumphosphat-haltigen Retentats R3 sowie eines dritten Permeats P3;
(f) Vermischen des dritten Permeats P3 aus Schritt (e) mit dem proteinreichen Retentat R1 aus Schritt (b); und
(g) Entwässern der Mischung aus Schritt (f).

3. Verfahren nach den Ansprüchen 1 und/oder 2, **dadurch gekennzeichnet, dass** man die Ultrafiltration gemäß Schritt (b) mit einer Membran durchführt, die einen mittleren Porendurchmesser von etwa 5.000 bis etwa 50.000 Dalton aufweist.

4. Verfahren nach mindestens einem der Ansprüche 1 bis 3, **dadurch gekennzeichnet, dass** man die Nanofiltration mit einer Membran durchführt, die einen mittleren Porendurchmesser von etwa 150 bis etwa 1.000 Dalton aufweist.

5. Verfahren nach mindestens einem der Ansprüche 1 bis 4, **dadurch gekennzeichnet, dass** man die Ultrafiltration gemäß Schritt (b) bzw. die Nanofiltration gemäß Schritt (c jeweils unabhängig voneinander bei Temperaturen im Bereich von etwa 10 bis etwa 60 °C durchführt.

6. Verfahren nach mindestens einem der Ansprüche 1 bis 5, **dadurch gekennzeichnet, dass** man die Temperaturbehandlung gemäß Schritt (d) bei einer Temperatur im Bereich von etwa 70 bis etwa 90 °C durchführt.

7. Verfahren nach mindestens einem der Ansprüche 1 bis 6, **dadurch gekennzeichnet, dass** man die Temperaturbehandlung gemäß Schritt (d) über einen Zeitraum von etwa 10 bis etwa 30 Minuten durchführt.

8. Verfahren nach mindestens einem der Ansprüche 1 bis 7, **dadurch gekennzeichnet, dass** man das temperaturbehandelte Produkt aus Schritt (d) einer Ultrafiltration oder einer Mikrofiltration unterwirft.

9. Verfahren nach Anspruch 8, **dadurch gekennzeichnet, dass** man die Ultra- bzw. Mikrofiltration gemäß Schritt (e) mit einer Membran durchführt, die einen mittleren Porendurchmesser von etwa 300.000 bis etwa 800.000 Dalton aufweist.

10. Verfahren nach den Ansprüchen 8 und/oder 9, **dadurch gekennzeichnet, dass** man die Ultra- bzw. Mikrofiltration gemäß Schritt (e) bei einer Temperatur im Bereich von etwa 10 bis etwa 60 °C durchführt.

11. Verfahren nach mindestens einem der Ansprüche 1 bis 10, **dadurch gekennzeichnet, dass** man ein demineralisiertes Milchpulver herstellt, das einen Aschegehalt von maximal 3 Gew.-% aufweist.

## Claims

1. A method for producing a demineralized milk powder, comprising or consisting of the following steps:
(a) providing whole milk,
(b) pasteurizing the whole milk and subsequently or simultaneously separating the pasteurized product into a skim milk fraction and a cream fraction,
(c subjecting the cream fraction from step (b) to a heat treatment,
(d) subjecting the skim milk fraction from step (b) to ultrafiltration or diafiltration to obtain a first protein-rich retentate R1 and a first permeate P1,
(e) subjecting the permeate P1 from step (d) to nanofiltration to obtain a second retentate R2 containing lactose and minerals and a second permeate P2, wherein the nanofiltration is carried out using a membrane having an average pore size of about 100 to about 2,000 Dalton,
(f) subjecting the retentate R2 from step (e) to a heat treatment,
(g) filtering or separating the heat-treated product from step (f) to obtain a third retentate R3 containing calcium phosphate and a third permeate P3,
(h) mixing the third permeate P3 from step (g) with the protein-rich retentate R1 from step (d) and at least a portion of the heat-treated cream fraction from step (c), and
(i) dehydrating the mixture from step (h).

2. A method for producing a demineralized milk powder, comprising or consisting of the following steps:
(a) providing skim milk,
(b) subjecting the skim milk to ultrafiltration or diafiltration to obtain a first protein-rich retentate R1 and a first permeate P1,
(c) subjecting the permeate P1 from step (b) to nanofiltration to obtain a second retentate R2 containing lactose and minerals and a second permeate P2, wherein the nanofiltration is carried out using a membrane having an average pore size of about 100 to about 2,000 Dalton,
(d) subjecting the retentate R2 from step (c) to a heat treatment,
(e) filtering or separating the heat-treated product from step (d) to obtain a third retentate R3 containing calcium phosphate and a third permeate P3,
(f) mixing the third permeate P3 from step (e) with the protein-rich retentate R1 from step (b), and
(g) dehydrating the mixture from step (f).

3. The method according to claim 1 and/or 2, **characterized in that** the ultrafiltration according to step (b) is carried out using a membrane having an average pore size of about 5,000 to about 50,000 Dalton.

4. The method according to at least one of claims 1 to 3, **characterized in that** the nanofiltration is carried out using a membrane having an average pore size of about 150 to about 1,000 Dalton.

5. The method according to at least one of claims 1 to 4, **characterized in that** the ultrafiltration according to step (b) and/or the nanofiltration according to step (c) are each independently carried out at a temperature in the range of about 10 to about 60°C.

6. The method according to at least one of claims 1 to 5, **characterized in that** the heat treatment according to step (d) is carried out at a temperature in the range of about 70 to about 90°C.

7. The method according to at least one of claims 1 to 6, **characterized in that** the heat treatment according to step (d) is carried out over a period of about 10 to about 30 minutes.

8. The method according to at least one of claims 1 to 7, **characterized in that** the heat-treated product from step (d) is subjected to ultrafiltration or microfiltration.

9. The method according to claim 8, **characterized in that** the ultrafiltration or microfiltration according to step (e) is carried out using a membrane having an average pore size of about 300,000 to about 800,000 Dalton.

10. The method according to claim 8 and/or 9, **characterized in that** the ultrafiltration or microfiltration according to step (e) is carried out at a temperature in the range of about 10 to about 60°C.

11. The method according to at least one of claims 1 to 10, **characterized in that** a demineralized milk powder is produced having an ash content of at most 3 wt.%.

## Revendications

1. Procédé de préparation d'un lait en poudre déminéralisé, comprenant ou consistant en les étapes suivantes :
(a) mise à disposition de lait entier ;
(b) pasteurisation du lait entier et séparation subséquente ou simultanée du produit de pasteurisation en une fraction de lait écrémé et une fraction de crème ;
(c) traitement thermique de la fraction de crème de l'étape (b) ;
(d) ultrafiltration ou diafiltration de la fraction de lait écrémé de l'étape (b) pour obtenir un premier rétentat R1 riche en protéines ainsi qu'un premier perméat P1 ;
(e) nanofiltration du perméat P1 de l'étape (d) pour obtenir un deuxième rétentat R2 contenant du lactose et des minéraux, ainsi qu'un deuxième perméat P2, la nanofiltration étant réalisée avec une membrane ayant un diamètre moyen de pores d'environ 100 à environ 2000 Dalton ;
(f) traitement thermique du rétentat R2 de l'étape (e) ;
(g) filtration ou séparation du produit traité par la température de l'étape (f) pour obtenir un troisième rétentat R3 contenant du phosphate de calcium ainsi qu'un troisième perméat P3 ;
(h) mélanger le troisième perméat P3 de l'étape (g) avec le rétentat R1 riche en protéines de l'étape (b) et au moins une partie de la fraction de crème traitée thermiquement de l'étape (c) ; et
(i) déshydratation du mélange de l'étape (h).

2. Procédé de préparation d'une poudre de lait déminéralisée, comprenant ou consistant en les étapes suivantes :
(a) mise à disposition de lait écrémé ;
(b) ultrafiltration ou diafiltration du lait écrémé pour obtenir un premier rétentat R1 riche en protéines ainsi qu'un premier perméat P1 ;
(c) nanofiltration du perméat P1 de l'étape (b) pour obtenir un deuxième rétentat R2 contenant du lactose et des minéraux, ainsi qu'un deuxième perméat P2, la nanofiltration étant effectuée avec une membrane ayant un diamètre moyen de pores d'environ 100 à environ 2000 daltons ;
(d) traitement thermique du rétentat R2 de l'étape (c) ;
(e) filtration ou séparation du produit traité par la température de l'étape (d) pour obtenir un troisième rétentat R3 contenant du phosphate de calcium ainsi qu'un troisième perméat P3 ;
(f) mélanger le troisième perméat P3 de l'étape (e) avec le rétentat R1 riche en protéines de l'étape (b) ; et
(g) déshydrater le mélange de l'étape (f).

3. Procédé selon les revendications 1 et/ou 2, **caractérisé en ce que** l'on effectue l'ultrafiltration selon l'étape (b) avec une membrane qui présente un diamètre moyen de pores d'environ 5000 à environ 50 000 daltons.

4. Procédé selon au moins l'une des revendications 1 à 3, **caractérisé en ce que** l'on réalise la nanofiltration avec une membrane présentant un diamètre moyen de pores d'environ 150 à environ 1000 daltons.

5. Procédé selon au moins l'une des revendications 1 à 4, **caractérisé en ce que** l'on réalise l'ultrafiltration selon l'étape (b) ou la nanofiltration selon l'étape (c) respectivement indépendamment l'une de l'autre à des températures comprises entre environ 10 et environ 60°C.

6. Procédé selon au moins l'une des revendications 1 à 5, **caractérisé en ce que** l'on réalise le traitement thermique selon l'étape (d) à une température comprise entre environ 70 et environ 90°C.

7. Procédé selon au moins l'une des revendications 1 à 6, **caractérisé en ce que** l'on effectue le traitement thermique selon l'étape (d) pendant une durée comprise entre environ 10 et environ 30 minutes.

8. Procédé selon au moins l'une des revendications 1 à 7, **caractérisé en ce que** l'on soumet le produit traité thermiquement de l'étape (d) à une ultrafiltration ou à une microfiltration.

9. Procédé selon la revendication 8, **caractérisé en ce que** l'on réalise l'ultrafiltration ou la microfiltration selon l'étape (e) avec une membrane présentant un diamètre moyen de pores compris entre environ 300 000 et environ 800 000 daltons.

10. Procédé selon les revendications 8 et/ou 9, **caractérisé en ce que** l'on réalise l'ultrafiltration ou la microfiltration selon l'étape (e) à une température comprise entre environ 10 et environ 60°C.

11. Procédé selon au moins l'une des revendications 1 à 10, **caractérisé en ce que** l'on prépare une poudre de lait déminéralisée présentant une teneur en cendres d'au plus 3 % en poids.
